# EUROPÄISCHE PATENTSCHRIFT

(11) **EP 2 881 880 B1**
(45) Veröffentlichungstag und Bekanntmachung des Hinweises auf die Patenterteilung: **05.08.2020**
(21) Anmeldenummer: 14196211.8
(22) Anmeldetag: 04.12.2014
(51) Int. Cl.: G06F 21/34

(54) **VERFAHREN ZUM VERIFIZIEREN, OB EINE ELEKTRONISCHE DIENSTANFRAGE ZUR AUSFÜHRUNG EINES ELEKTRONISCHEN DIENSTES VON EINER PERSON ODER VON EINEM AUTOMATEN STAMMT**
METHOD FOR VERIFYING WHETHER AN ELECTRONIC SERVICE QUERY FOR CARRYING OUT AN ELECTRONIC SERVICE COMES FROM A PERSON OR AN AUTOMATED APPARATUS
PROCÉDÉ DE VÉRIFICATION PERMETTANT DE SAVOIR SI UNE DEMANDE DE SERVICE ÉLECTRONIQUE D'EXÉCUTION D'UN SERVICE ÉLECTRONIQUE PROVIENT D'UNE PERSONNE OU D'UN AUTOMATE

(30) Priorität: 06.12.2013 DE 102013113662
(43) Veröffentlichungstag der Anmeldung: 10.06.2015
(73) Patentinhaber: Bundesdruckerei GmbH, 10969 Berlin (DE)
(72) Erfinder: SEEGEBARTH, Christian, 20249 Hamburg (DE); BYSZIO, Frank, 16348 Wandlitz (DE)
(74) Vertreter: Patentship Patentanwaltsgesellschaft mbH

(56) Entgegenhaltungen:
- EP-A1- 2 631 834

## Beschreibung

Die vorliegende Erfindung betrifft das Gebiet der Verifikation elektronischer Dienstanfragen zur Ausführung elektronischer Dienste.

Die Offenlegungsschrift EP 2 631 834 A1 zeigt ein Verfahren zur Bestimmung einer Anwesenheit eines menschlichen Wesens.

Die Entwicklung des Internets ermöglichte die Schaffung einer Mehrzahl unterschiedlicher elektronischer Dienste, durch welche Dienstleistungen, wie beispielsweise elektronische Transaktionen oder Erwerb von Waren, implementiert werden.

Ein elektronischer Dienst wird üblicherweise durch einen Benutzer eines Kommunikationsterminals, beispielsweise eines Computers oder eines Smartphones, über das Internet angefordert. Hierzu wird üblicherweise eine elektronische Dienstanfrage zur Ausführung des elektronischen Dienstes an einen Dienstserver übertragen, welcher die Ausführung des elektronischen Dienstes initiieren kann.

Ein elektronischer Dienst kann auch in missbräuchlicher Absicht durch einen Automaten angefordert werden. Zumeist werden dabei vermehrt elektronische Dienstanfragen von dem Automaten erzeugt und automatisch zu dem Dienstserver übertragen.

Um ein Anfordern eines elektronischen Dienstes durch einen Automaten zu erschweren, können beispielsweise CAPTCHAs (Completely Automated Public Turing test to tell Computers and Humans Apart) eingesetzt werden. Bei einem CAPTCHA wird beispielsweise ein Text mittels eines Bildfilters verzerrt und eine Eingabe des entzerrten Textes in ein Texteingabefeld gefordert. Diese Aufgabe ist für eine Person üblicherweise einfach zu lösen, für einen Automaten hingegen sehr schwierig.

Nachteilig an der Nutzung von CAPTCHAs wirkt sich dabei aus, dass eine Unterscheidung, ob eine elektronische Dienstanfrage von einer Person oder von einem Automaten stammt, durch immer leistungsfähigere Automaten zunehmend erschwert wird. Zudem wird die Nutzung von CAPTCHAs häufig als unkomfortabel empfunden.

Es ist daher die Aufgabe der vorliegenden Erfindung, ein effizientes Konzept zur Verifikation, ob eine elektronische Dienstanfrage zur Ausführung eines elektronischen Dienstes von einer Person oder von einem Automaten stammt, zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch die Verwendung einer personenbezogenen elektronischen Schaltung gelöst werden kann. Die personenbezogene elektronische Schaltung kann dabei eindeutig einer Person zugeordnet sein. Dadurch wird erreicht, dass eine Unterscheidung zwischen einer Person und einem Automaten bei der Anforderung eines elektronischen Dienstes erleichtert wird. Ein missbräuchliches vermehrtes Anfordern elektronischer Dienste durch einen Automaten kann somit effektiv begrenzt werden.

Die personenbezogene elektronische Schaltung kann beispielsweise in einem elektronisch auslesbaren Identifikationsdokument der Person, beispielsweise einem neuen Personalausweis (nPA), integriert sein. Dadurch kann eine eindeutige Zuordnung der personenbezogenen elektronischen Schaltung zu der Person realisiert werden.

Gemäß einem ersten Aspekt betrifft die Erfindung ein Verfahren zum Verifizieren, ob eine elektronische Dienstanfrage zur Ausführung eines elektronischen Dienstes von einer Person oder von einem Automaten stammt, unter Verwendung einer personenbezogenen elektronischen Schaltung, mit einem Empfangen der elektronischen Dienstanfrage über ein Kommunikationsnetzwerk durch einen Dienstserver, einem Aufbauen einer Kommunikationsverbindung zwischen dem Dienstserver und der personenbezogenen elektronischen Schaltung, und ansprechend auf einen Empfang einer elektronischen Nachricht von der elektronischen Schaltung durch den Dienstserver, einem Verifizieren, dass die elektronische Dienstanfrage von einer Person stammt. Dadurch wird der Vorteil erreicht, dass ein effizientes Konzept zur Verifikation, ob eine elektronische Dienstanfrage zur Ausführung eines elektronischen Dienstes von einer Person oder von einem Automaten stammt, realisiert werden kann.

Die elektronische Dienstanfrage kann durch ein Kommunikationsterminal, beispielsweise einen Computer oder ein Smartphone, erzeugt und an den Dienstserver ausgesendet werden. Die elektronische Dienstanfrage kann ferner durch die personenbezogene elektronische Schaltung erzeugt und an den Dienstserver ausgesendet werden. Die elektronische Dienstanfrage kann Angaben zur Ausführung des elektronischen Dienstes, beispielsweise einen Diensttyp und/oder Dienstparameter, umfassen.

Der elektronische Dienst kann eine elektronische Dienstleistung durchführen. Die elektronische Dienstleistung kann beispielsweise eine elektronische Bereitstellung von Informationen oder eine elektronische Durchführung von Transaktionen umfassen.

Der Dienstserver kann den elektronischen Dienst bereitstellen und durchführen. Der Dienstserver kann ein Server im Sinne einer Netzwerkinfrastruktur sein.

Die Person kann einen menschlichen Benutzer umfassen, welcher den elektronischen Dienst anfordern kann. Der Automat kann einen Computer oder einen Digitalrechner umfassen, welcher den elektronischen Dienst in automatisierter Weise anfordern kann.

Die personenbezogene elektronische Schaltung kann eindeutig einer Person zugeordnet sein. Die eindeutige Zuordnung der personenbezogenen elektronischen Schaltung zu der Person kann beispielsweise durch hoheitliche Maßnahmen realisiert werden. Beispielsweise kann ein elektronisch auslesbares Identifikationsdokument der Person die personenbezogene elektronische Schaltung umfassen.

Die elektronische Nachricht kann durch die personenbezogene elektronische Schaltung erzeugt und an den Dienstserver ausgesendet werden. Gemäß der Erfindung umfasst die elektronische Nachricht Angaben zur Person, beispielsweise einen Namen und/oder eine Anschrift. Die elektronische Nachricht kann ferner eine elektronische Identifikation der personenbezogenen elektronischen Schaltung umfassen.

Das Kommunikationsnetzwerk kann durch eine Anordnung einer Mehrzahl von Servern, Clients und/oder Computern gebildet sein. Das Kommunikationsnetzwerk kann beispielsweise das Internet sein.

Die Kommunikationsverbindung kann authentifiziert und/oder verschlüsselt sein. Die Kommunikationsverbindung kann ferner drahtgebunden oder drahtlos sein. Die Kommunikationsverbindung kann über das Kommunikationsnetzwerk aufgebaut werden.

Gemäß einer Ausführungsform ist die elektronische Nachricht eine Restricted Identification der elektronischen Schaltung oder eine vorbestimmte Antwortnachricht. Dadurch wird der Vorteil erreicht, dass eine eindeutige elektronische Nachricht eingesetzt werden kann.

Die Restricted Identification kann auf Grundlage eines Diffie-Hellman-Schlüsselaustausches durch die personenbezogene elektronische Schaltung erzeugt werden. Die Restricted Identification kann beispielsweise gemäß der technischen Richtlinie BSI TR-03110 realisiert werden.

Die vorbestimmte Antwortnachricht kann durch eine Folge von Buchstaben, Ziffern, Bytes und/oder Symbolen gebildet werden. Die vorbestimmte Antwortnachricht kann ferner eine Bestätigung der Authentizität oder Echtheit der personenbezogenen elektronischen Schaltung umfassen.

Gemäß einer Ausführungsform wird in dem Schritt des Aufbauens der Kommunikationsverbindung ein öffentlicher kryptographischer Schlüssel des Dienstservers zu der elektronischen Schaltung übermittelt, wobei die elektronische Nachricht mittels der elektronischen Schaltung durch eine Verknüpfung des empfangenen öffentlichen kryptographischen Schlüssels mit einem privaten kryptographischen Schlüssel der elektronischen Schaltung erzeugt wird. Dadurch wird der Vorteil erreicht, dass eine pseudonyme elektronische Nachricht eingesetzt werden kann.

Der öffentliche kryptographische Schlüssel des Dienstservers kann Teil eines kryptographischen Schlüsselpaares sein und gemäß einer Public-Key-Infrastruktur erzeugt worden sein.

Der private kryptographische Schlüssel der elektronischen Schaltung kann Teil eines kryptographischen Schlüsselpaares sein und gemäß einer Public-Key-Infrastruktur erzeugt worden sein.

Die Verknüpfung des empfangenen öffentlichen kryptographischen Schlüssels mit dem privaten kryptographischen Schlüssel der elektronischen Schaltung kann durch binäre Verknüpfungen, wie beispielsweise Exklusiv-Oder, durch kryptographische Algorithmen, wie beispielsweise Advanced Encryption Standard (AES), und/oder durch Algorithmen zur Hashwertbildung, wie beispielsweise Secure Hash Algorithm (SHA), realisiert werden. Die Verknüpfung kann ferner eine Berechnung von Prüfsummen des empfangenen öffentlichen kryptographischen Schlüssels und/oder des privaten kryptographischen Schlüssels der elektronischen Schaltung umfassen.

Gemäß einer Ausführungsform wird der öffentliche kryptographische Schlüssel des Dienstservers von dem Dienstserver oder von einem Identifikationsserver an die elektronische Schaltung übermittelt. Dadurch wird der Vorteil erreicht, dass der öffentliche kryptographische Schlüssel effizient bereitgestellt werden kann.

Der Identifikationsserver kann eine Mehrzahl öffentlicher kryptographischer Schlüssel einer Mehrzahl von Dienstservern verwalten. Der Identifikationsserver kann beispielsweise ein eID-Server gemäß der technischen Richtlinie BSI TR-03130 sein.

Gemäß der Erfindung wird in dem Schritt des Aufbauens der Kommunikationsverbindung die elektronische Schaltung auf der Basis eines durch die elektronische Schaltung verwendeten Kommunikationsprotokolls identifiziert. Dadurch wird der Vorteil erreicht, dass die elektronische Schaltung effizient identifiziert werden kann.

Das Kommunikationsprotokoll kann den Ablauf der Kommunikation regeln. Beispielsweise können durch das Kommunikationsprotokoll die Formatierung der elektronischen Nachricht, der Beginn und das Ende der Übertragung, die Datenflusskontrolle der Übertragung und/oder die Fehlerkorrekturverfahren der Übertragung geregelt werden.

Auf Basis des verwendeten Kommunikationsprotokolls kann beispielsweise eine elektronische Nachricht durch die elektronische Schaltung erzeugt werden.

Gemäß der Erfindung wird in dem Schritt des Verifizierens die elektronische Nachricht mit einer vorgespeicherten elektronischen Nachricht verglichen, wobei bei einer Übereinstimmung zwischen der elektronischen Nachricht und der vorgespeicherten elektronischen Nachricht verifiziert wird, dass die Dienstanfrage von einer Person stammt. Dadurch wird der Vorteil erreicht, dass die Verifikation, dass die Dienstanfrage von einer Person stammt, effizient durchgeführt werden kann.

Gemäß der Erfindung umfasst die vorgespeicherte elektronische Nachricht Angaben zur Person, beispielsweise einen Namen und/oder eine Anschrift. Die vorgespeicherte elektronische Nachricht kann ferner eine elektronische Identifikation der personenbezogenen elektronischen Schaltung umfassen. Die vorgespeicherte elektronische Nachricht kann in einem Speicher des Dienstservers abgelegt sein.

Die Übereinstimmung zwischen der elektronischen Nachricht und der vorgespeicherten elektronischen Nachricht kann vorliegen, wenn die elektronische Nachricht und die vorgespeicherte elektronische Nachricht identisch sind.

Gemäß der Erfindung ist die elektronische Schaltung ein kryptographischer Schaltkreis eines elektronisch auslesbaren Identifikationsdokumentes oder ein kryptographischer Schaltkreis einer Gesundheitskarte. Dadurch wird der Vorteil erreicht, dass effiziente Schaltkreise verwendet werden können.

Das elektronisch auslesbare Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das elektronisch auslesbare Identifikationsdokument kann ein- oder mehrlagig bzw. papier- und/oder kunststoffbasiert sein. Das elektronisch auslesbare Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Das elektronisch auslesbare Identifikationsdokument kann ferner einen kryptographischen Schaltkreis umfassen.

Die Gesundheitskarte kann ein- oder mehrlagig bzw. papier- und/oder kunststoffbasiert sein. Die Gesundheitskarte kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Die Gesundheitskarte kann ferner einen kryptographischen Schaltkreis umfassen.

Ein USB-Schaltkreis kann eine Universal Serial Bus (USB) Schnittstelle umfassen. Der USB-Schaltkreis kann ferner einen kryptographischen Schaltkreis umfassen.

Der kryptographische Schaltkreis des elektronisch auslesbaren Identifikationsdokumentes oder der kryptographische Schaltkreis der Gesundheitskarte oder der USB-Schaltkreis können ausgebildet sein, binäre Verknüpfungen, wie beispielsweise Exklusiv-Oder, kryptographische Algorithmen, wie beispielsweise Advanced Encryption Standard (AES), Algorithmen zur Hashwertbildung, wie beispielsweise Secure Hash Algorithm (SHA), und/oder Prüfsummenberechnungen, auszuführen. Der kryptographische Schaltkreis des elektronisch auslesbaren Identifikationsdokumentes oder der kryptographische Schaltkreis der Gesundheitskarte können einen Radio Frequency Identification (RFID) Chip umfassen.

Gemäß einer Ausführungsform wird durch das Verfahren ein CAPTCHA-Test durchgeführt. Dadurch wird der Vorteil erreicht, dass eine effiziente Unterscheidung zwischen einer Person und einem Automaten möglich wird.

Der CAPTCHA (Completely Automated Public Turing test to tell Computers and Humans Apart) Test kann beispielsweise durch den Dienstserver und/oder die personenbezogene elektronische Schaltung durchgeführt werden.

Gemäß einer Ausführungsform wird der elektronische Dienst nach einer Verifikation, dass die elektronische Dienstanfrage von einer Person stammt, ausgeführt. Dadurch wird der Vorteil erreicht, dass der elektronische Dienst nur von einer Person angefordert werden kann.

Gemäß einer Ausführungsform wird der elektronische Dienst nach einer Verifikation, dass die elektronische Dienstanfrage von einem Automaten stammt, nicht ausgeführt. Dadurch wird der Vorteil erreicht, dass der elektronische Dienst nur von einer Person angefordert werden kann.

Gemäß einer Ausführungsform wird bei einem Ausbleiben des Empfangs der elektronischen Nachricht eine Ausführung des elektronischen Dienstes unterbunden. Dadurch wird der Vorteil erreicht, dass der elektronische Dienst nur bei erfolgter Übertragung der elektronischen Nachricht angefordert werden kann.

Das Ausbleiben des Empfangs kann nach einer vorbestimmten Zeitdauer festgestellt werden. Die vorbestimmte Zeitdauer kann beispielsweise 1 Sekunde, 2 Sekunden, 5 Sekunden, 10 Sekunden oder länger, beispielsweise 1 Minute, sein.

Gemäß einem zweiten Aspekt betrifft die Erfindung ein Computerprogramm mit einem Programmcode zum Ausführen des Verfahrens, wenn der Programmcode auf einem Computer ausgeführt wird. Dadurch wird der Vorteil erreicht, dass das Verfahren automatisiert und wiederholbar ausgeführt werden kann.

Das Computerprogramm kann eine Folge von Befehlen für einen Prozessor eines Computers umfassen. Das Computerprogramm kann in Form eines maschinen-lesbaren Programmcodes vorliegen.

Der Computer kann einen Prozessor, einen Speicher, eine Eingabeschnittstelle und/oder eine Ausgabeschnittstelle umfassen. Der Prozessor des Computers kann ausgebildet sein, das Computerprogramm auszuführen.

Das Computerprogramm kann beispielsweise auf der personenbezogenen elektronischen Schaltung, auf dem Dienstserver und/oder auf einem Kommunikationsterminal eines Benutzers ausgeführt werden.

Die Erfindung kann in Hardware und/oder in Software realisiert werden.

Weitere Ausführungsbeispiele werden Bezug nehmend auf die beiliegenden Zeichnungen näher erläutert. Es zeigen:
- Fig. 1: ein schematisches Diagramm eines Verfahrens zum Verifizieren, ob eine elektronische Dienstanfrage zur Ausführung eines elektronischen Dienstes von einer Person oder von einem Automaten stammt, gemäß einer Ausführungsform;
- Fig. 2: ein schematisches Diagramm eines Kommunikationsszenarios zum Verifizieren, ob eine elektronische Dienstanfrage zur Ausführung eines elektronischen Dienstes von einer Person oder von einem Automaten stammt, gemäß einer Ausführungsform; und
- Fig. 3: ein schematisches Diagramm zur Anforderung eines elektronischen Dienstes gemäß einer Ausführungsform.

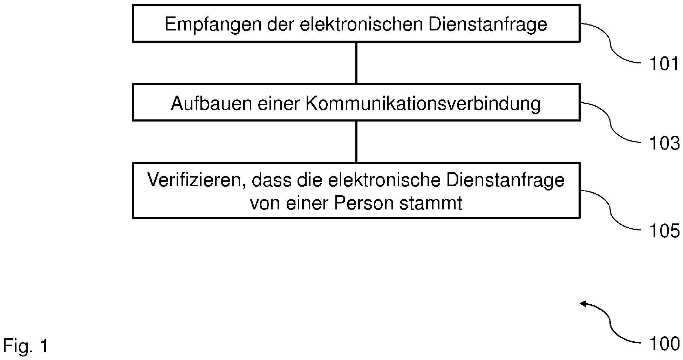

Fig. 1 zeigt ein schematisches Diagramm eines Verfahrens 100 zum Verifizieren, ob eine elektronische Dienstanfrage zur Ausführung eines elektronischen Dienstes von einer Person oder von einem Automaten stammt, gemäß einer Ausführungsform.

Das Verfahren 100 wird unter Verwendung einer personenbezogenen elektronischen Schaltung durchgeführt.

Das Verfahren 100 umfasst ein Empfangen 101 der elektronischen Dienstanfrage über ein Kommunikationsnetzwerk durch einen Dienstserver, ein Aufbauen 103 einer Kommunikationsverbindung zwischen dem Dienstserver und der personenbezogenen elektronischen Schaltung, und ansprechend auf einen Empfang einer elektronischen Nachricht von der elektronischen Schaltung durch den Dienstserver, ein Verifizieren 105, dass die elektronische Dienstanfrage von einer Person stammt.

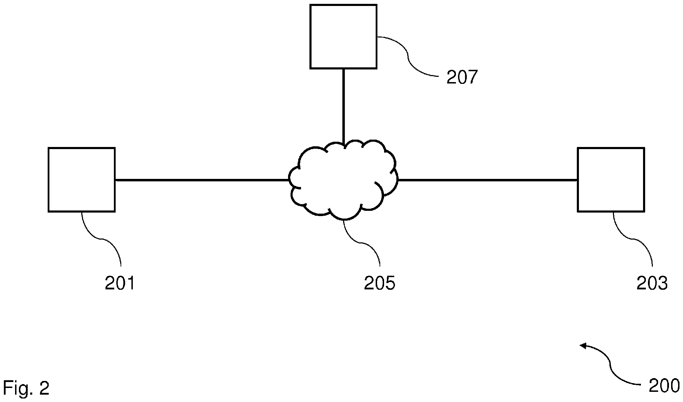

Fig. 2 zeigt ein schematisches Diagramm eines Kommunikationsszenarios 200 zum Verifizieren, ob eine elektronische Dienstanfrage zur Ausführung eines elektronischen Dienstes von einer Person oder von einem Automaten stammt, gemäß einer Ausführungsform.

Das Kommunikationsszenario 200 umfasst eine personenbezogene elektronische Schaltung 201, einen Dienstserver 203, ein Kommunikationsnetzwerk 205 und einen Identifikationsserver 207.

Die personenbezogene elektronische Schaltung 201 kann eindeutig einer Person zugeordnet sein. Die eindeutige Zuordnung der personenbezogenen elektronischen Schaltung 201 zu der Person kann beispielsweise durch hoheitliche Maßnahmen realisiert werden. Beispielsweise kann ein elektronisch auslesbares Identifikationsdokument der Person die personenbezogene elektronische Schaltung 201 umfassen.

Der Dienstserver 203 kann den elektronischen Dienst bereitstellen und durchführen. Der Dienstserver 203 kann ein Server im Sinne einer Netzwerkinfrastruktur sein.

Das Kommunikationsnetzwerk 205 kann durch eine Anordnung einer Mehrzahl von Servern, Clients und/oder Computern gebildet sein. Das Kommunikationsnetzwerk 205 kann beispielsweise das Internet sein.

Der Identifikationsserver 207 kann eine Mehrzahl öffentlicher kryptographischer Schlüssel einer Mehrzahl von Dienstservern verwalten. Der Identifikationsserver 207 kann beispielsweise ein eID-Server gemäß der technischen Richtlinie BSI TR-03130 sein.

Ein Verifizieren, ob eine elektronische Dienstanfrage zur Ausführung eines elektronischen Dienstes von einer Person oder von einem Automaten stammt, kann beispielsweise folgendermaßen durchgeführt werden.

Die personenbezogene elektronische Schaltung 201 erzeugt eine elektronische Dienstanfrage und sendet diese über das Kommunikationsnetzwerk 205 an den Dienstserver 203 aus. Die elektronische Dienstanfrage wird durch den Dienstserver 203 über das Kommunikationsnetzwerk 205 empfangen. Daraufhin wird zwischen dem Dienstserver 203 und der personenbezogenen elektronischen Schaltung 201 eine Kommunikationsverbindung aufgebaut.

Gemäß einer Ausführungsform wird eine weitere Kommunikationsverbindung zwischen der personenbezogenen elektronischen Schaltung 201 und dem Identifikationsserver 207 aufgebaut. Anschließend kann ein öffentlicher kryptographischer Schlüssel des Dienstservers 203 von dem Identifikationsserver 207 an die elektronische Schaltung 201 übermittelt werden. Die personenbezogene elektronische Schaltung 201 erzeugt nun eine elektronische Nachricht durch eine Verknüpfung des empfangenen öffentlichen kryptographischen Schlüssels mit einem privaten kryptographischen Schlüssel der elektronischen Schaltung 201 und sendet die elektronische Nachricht über das Kommunikationsnetzwerk 205 an den Dienstserver 203 aus.

Gemäß einer weiteren Ausführungsform erzeugt die personenbezogene elektronische Schaltung 201 auf Basis des verwendeten Kommunikationsprotokolls zum Aufbau der Kommunikationsverbindung zwischen dem Dienstserver 203 und der personenbezogenen elektronischen Schaltung 201 eine elektronische Nachricht und sendet die elektronische Nachricht über das Kommunikationsnetzwerk 205 an den Dienstserver 203 aus.

Ansprechend auf den Empfang der elektronischen Nachricht von der elektronischen Schaltung 201 durch den Dienstserver 203 erfolgt das Verifizieren, dass die elektronische Dienstanfrage von einer Person stammt. Das Verifizieren kann beispielsweise dadurch erfolgen, dass die elektronische Nachricht mit einer vorgespeicherten elektronischen Nachricht verglichen wird, wobei bei einer Übereinstimmung zwischen der elektronischen Nachricht und der vorgespeicherten elektronischen Nachricht verifiziert wird, dass die Dienstanfrage von einer Person stammt.

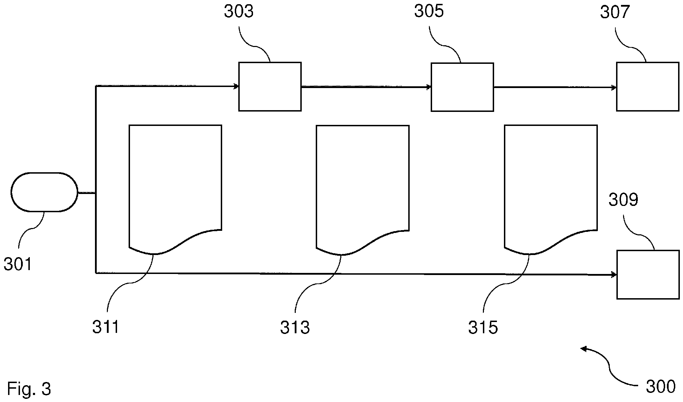

Fig. 3 zeigt ein schematisches Diagramm 300 zur Anforderung eines elektronischen Dienstes gemäß einer Ausführungsform.

Das Diagramm 300 umfasst die Blöcke 301, 303, 305, 307, 309, 311, 313, 315.

Der Block 301 veranschaulicht als Zielsetzung eine Erschwerung oder eine Verhinderung unautorisierter Zugriffe auf einen elektronischen Dienst.

Der Block 303 veranschaulicht eine Realisierungsmöglichkeit mittels CAPCHA. Der Block 305 veranschaulicht eine Realisierungsmöglichkeit mittels IP / MAC Speicherung. Der Block 307 veranschaulicht eine Realisierungsmöglichkeit mittels PIN / Benutzer (User) Identifikation.

Der Block 309 veranschaulicht eine Realisierungsmöglichkeit mittels einer personenbezogenen elektronischen Schaltung oder einem entsprechend konfigurierten Chip, beispielsweise in einem neuen Personalausweis (nPA).

Der Block 311 veranschaulicht als Zielsetzung oder Anforderung eine Erschwerung oder eine Verhinderung eines maschinellen Zugriffs, eines Brute-Force Ansatzes oder eines Man-in-the-Middle Ansatzes. Der Block 313 veranschaulicht als Zielsetzung oder Anforderung eine Erschwerung oder eine Verhinderung im Sonderfall einer Wiederholungsnutzung oder eines Denial-of-Service (DOS) Ansatzes mittels Wiederholung zur Blockierung des elektronischen Dienstes. Der Block 315 veranschaulicht als Zielsetzung oder Anforderung eine Erschwerung oder eine Verhinderung eines Netzwerk-Hoppings oder einer Erkennung von CAPTCHAs durch unautorisierte Personen oder Menschen.

Gemäß einer Ausführungsform betrifft die Erfindung ein Verfahren zum Begrenzen oder Ausschließen von Automaten als Benutzer elektronischer Dienste unter Verwendung personenbezogener elektronischer oder vorkonfigurierter Schaltungen oder Chips. Zur Erschwerung oder Vermeidung von Angriffen und/oder zur Umgehung von CAPTCHAs kann eine personenbezogene elektronische Schaltung oder ein Chip eingesetzt werden. Durch ein vorgegebenes Kommunikationsprotokoll kann mit der personenbezogenen elektronischen Schaltung oder dem Chip eine Verifikation oder eine Prüfung durchgeführt oder durchlaufen werden, die üblicherweise nur eine Person oder ein menschlicher Benutzer durchführen kann. Dafür können beispielsweise ein USB-Schaltkreis oder ein USB-Token, ein Personalausweis, ein neuer Personalausweis (nPA), eine Gesundheitskarte (eGK) oder ein Heilberufsausweis (HBA) eingesetzt werden, da diese üblicherweise einer Person oder einem menschlichen Benutzer zugeordnet sind. Eine Nutzung oder ein Zugang zur personenbezogenen elektronischen Schaltung oder zum Chip ist beispielsweise mittels einer Persönlichen Identifikationsnummer (PIN) oder einer Card Access Number (CAN) möglich.

Gemäß einer Ausführungsform wird ein Entfallen von CAPTCHAs, ein Entfallen einer IP / MAC Kontrolle und/oder ein Entfallen einer manuellen Nutzerregistrierung zum Begrenzen oder Verhindern von Automaten als Benutzer elektronischer Dienste erreicht.

Gemäß einer Ausführungsform wird eine personenbezogene elektronische Schaltung oder ein entsprechend konfigurierter Chip, beispielsweise in einem neuen Personalausweis (nPA), einer elektronischen Gesundheitskarte (eGK) oder einem Heilberufsausweis (HBA), mittels eines Kommunikationsprotokolls identifiziert oder nachgewiesen. Somit kann implizit eine Person oder ein menschlicher Benutzer identifiziert oder nachgewiesen werden. Dieser kann dabei pseudonym oder anonym sein.

### BEZUGSZEICHENLISTE

- 100: Verfahren zum Verifizieren
- 101: Empfangen der elektronischen Dienstanfrage
- 103: Aufbauen einer Kommunikationsverbindung
- 105: Verifizieren, dass die elektronische Dienstanfrage von einer Person stammt

- 200: Kommunikationsszenario
- 201: Personenbezogene elektronische Schaltung
- 203: Dienstserver
- 205: Kommunikationsnetzwerk
- 207: Identifikationsserver

- 300: Diagramm
- 301: Block
- 303: Block
- 305: Block
- 307: Block
- 309: Block
- 311: Block
- 313: Block
- 315: Block

## Patentansprüche

1. Verfahren (100) zum Verifizieren, ob eine elektronische Dienstanfrage zur Ausführung eines elektronischen Dienstes von einer Person oder von einem Automaten stammt, unter Verwendung einer personenbezogenen elektronischen Schaltung (201), mit:
Empfangen (101) der elektronischen Dienstanfrage über ein Kommunikationsnetzwerk (205) durch einen Dienstserver (203);
Aufbauen (103) einer Kommunikationsverbindung zwischen dem Dienstserver (203) und der personenbezogenen elektronischen Schaltung (201); und
Ansprechend auf einen Empfang einer elektronischen Nachricht von der elektronischen Schaltung (201) durch den Dienstserver (203), Verifizieren (105), dass die elektronische Dienstanfrage von einer Person stammt,
wobei die elektronische Schaltung die elektronische Nachricht nur dann versendet, wenn mit der elektronischen Schaltung eine Prüfung durchgeführt wird, die üblicherweise nur eine Person durchführen kann,
wobei die elektronische Nachricht Angaben zur Person umfasst,
wobei in dem Schritt des Verifizierens (105) die elektronische Nachricht mit einer vorgespeicherten elektronischen Nachricht verglichen wird, und wobei bei einer Übereinstimmung zwischen der elektronischen Nachricht und der vorgespeicherten elektronischen Nachricht verifiziert wird, dass die Dienstanfrage von einer Person stammt,
wobei in dem Schritt des Aufbauens (103) der Kommunikationsverbindung die elektronische Schaltung (201) und damit implizit die Person auf der Basis eines durch die elektronische Schaltung (201) verwendeten Kommunikationsprotokolls identifiziert wird,
wobei die elektronische Schaltung ein kryptografischer Schaltkreis eines elektronisch auslesbaren Identifikationsdokumentes oder ein kryptografischer Schaltkreis einer Gesundheitskarte ist.

2. Verfahren (100) nach Anspruch 1, wobei die elektronische Nachricht eine Restricted Identification der elektronischen Schaltung (201) oder eine vorbestimmte Antwortnachricht ist.

3. Verfahren (100) nach Anspruch 1 oder 2, wobei in dem Schritt des Aufbauens (103) der Kommunikationsverbindung ein öffentlicher kryptographischer Schlüssel des Dienstservers (203) zu der elektronischen Schaltung (201) übermittelt wird, und wobei die elektronische Nachricht mittels der elektronischen Schaltung (201) durch eine Verknüpfung des empfangenen öffentlichen kryptographischen Schlüssels mit einem privaten kryptographischen Schlüssel der elektronischen Schaltung (201) erzeugt wird.

4. Verfahren (100) nach Anspruch 3, wobei der öffentliche kryptographische Schlüssel des Dienstservers (203) von dem Dienstserver (203) oder von einem Identifikationsserver (207) an die elektronische Schaltung (201) übermittelt wird.

5. Verfahren (100) nach einem der vorstehenden Ansprüche, wobei durch das Verfahren (100) ein CAPTCHA-Test durchgeführt wird.

6. Verfahren (100) nach einem der vorstehenden Ansprüche, wobei der elektronische Dienst nach einer Verifikation, dass die elektronische Dienstanfrage von einer Person stammt, ausgeführt wird.

7. Verfahren (100) nach einem der vorstehenden Ansprüche, wobei bei einem Ausbleiben des Empfangs der elektronischen Nachricht eine Ausführung des elektronischen Dienstes unterbunden wird.

8. Computerprogramm mit einem Programmcode zum Ausführen des Verfahrens (100) nach einem der vorstehenden Ansprüche, wenn der Programmcode auf einem Computer ausgeführt wird.

## Claims

1. A method (100) for verifying whether an electronic service request to perform an electronic service comes from a person or from a machine, by using a personal electronic circuit (201), the method comprising:
receiving (101) the electronic service request over a communication network (205) by a service server (203);
establishing (103) a communication link between the service server (203) and the personal electronic circuit (201); and
in response to a receipt of an electronic message from the electronic circuit (201) by the service server (203), verifying (105) that the electronic service request comes from a person,
wherein the electronic circuit only sends the electronic message if a test is carried out with the electronic circuit that usually only a person can carry out,
wherein the electronic message includes personal information,
wherein in the step of verifying (105) the electronic message is compared with a pre-stored electronic message, and wherein upon a matching of the electronic message and the pre-stored electronic message, it is verified that the service request comes from a person,
wherein in the step of establishing (103) the communication link, the electronic circuit (201) and thus implicitly the person is identified on the basis of a communication protocol used by the electronic circuit (201),
wherein the electronic circuit is a cryptographic circuit of an electronically readable identification document or a cryptographic circuit of a health card.

2. The method (100) of claim 1, wherein the electronic message is a Restricted Identification of the electronic circuit (201) or a predetermined response message.

3. The method (100) according to claim 1 or 2, wherein in the step of establishing (103) the communication link a public cryptographic key of the service server (203) is transmitted to the electronic circuit (201), and wherein the electronic message is generated by means of the electronic circuit (201) by linking the received public cryptographic key with a private cryptographic key of the electronic circuit (201).

4. The method (100) according to claim 3, wherein the public cryptographic key of the service server (203) is transmitted from the service server (203) or from an identification server (207) to the electronic circuit (201).

5. The method (100) according to one of the preceding claims, wherein a CAPTCHA test is carried out by the method (100).

6. The method (100) according to one of the preceding claims, wherein the electronic service is carried out after a verification that the electronic service request originates from a person

7. The method (100) according to one of the preceding claims, wherein if the electronic message is not received, execution of the electronic service is prevented.

8. Computer program with a program code for executing the method (100) according to one of the preceding claims, when the program code is executed on a computer.

## Revendications

1. Procédé (100) permettant de vérifier si une demande de service électronique d'exécution d'un service électronique provient d'une personne ou d'un robot, en utilisant un circuit électronique personnel (201), comprenant les étapes consistant à :
recevoir (101) la demande de service électronique sur un réseau de communication (205) par un serveur de services (203) ;
établir (103) une liaison de communication entre le serveur de services (203) et le circuit électronique personnel (201) ; et
en réponse à une réception d'un message électronique du circuit électronique (201) par le serveur de services (203), vérifier (105) que la demande de service électronique provient d'une personne,
le circuit électronique n'expédiant le message électronique que si une vérification est effectuée par le circuit électronique qu'en principe seule une personne est capable d'effectuer,
le message électronique comprenant des renseignements concernant la personne,
dans lequel, à l'étape de vérification (105), le message électronique est comparé à un message électronique stocké préalablement, et dans lequel, en cas de concordance entre le message électronique et le message électronique stocké préalablement, il est vérifié que la demande de service provient d'une personne,
dans lequel, à l'étape de l'établissement (103) de la liaison de communication, le circuit électronique (201), et donc implicitement la personne, est identifié (e) sur la base d'un protocole de communication utilisé par le circuit électronique (201),
le circuit électronique étant un circuit cryptographique d'un document d'identification lisible de manière électronique ou un circuit cryptographique d'une carte de santé.

2. Procédé (100) selon la revendication 1, dans lequel le message électronique est une identification restreinte du circuit électronique (201) ou un message de réponse prédéterminé.

3. Procédé (100) selon la revendication 1 ou 2, dans lequel, à l'étape consistant à établir (103) la liaison de communication, une clé cryptographique publique du serveur de services (203) est transmise au circuit électronique (201), et dans lequel le message électronique est généré au moyen du circuit électronique (201) en associant la clé cryptographique publique reçue à une clé cryptographique privée du circuit électronique (201).

4. Procédé (100) selon la revendication 3, dans lequel la clé cryptographique publique du serveur de services (203) est transmise du serveur de services (203) ou d'un serveur d'identification (207) au circuit électronique (201).

5. Procédé (100) selon l'une quelconque des revendications précédentes, dans lequel le procédé (100) effectue un test CAPTCHA.

6. Procédé (100) selon l'une quelconque des revendications précédentes, dans lequel le service électronique est effectué après une vérification que la demande de service électronique provient d'une personne.

7. Procédé (100) selon l'une quelconque des revendications précédentes, dans lequel une exécution du service électronique est inhibée en cas d'absence de réception du message électronique.

8. Programme informatique, comprenant du code programme pour effectuer le procédé (100) selon l'une quelconque des revendications précédentes, lorsque le code programme est exécuté sur un ordinateur.
